# EUROPÄISCHE PATENTSCHRIFT

(11) **EP 4 342 713 B1**
(45) Veröffentlichungstag und Bekanntmachung des Hinweises auf die Patenterteilung: **05.11.2025**
(21) Anmeldenummer: 23195705.1
(22) Anmeldetag: 06.09.2023
(51) Int. Cl.: B60K 7/00, B66C 9/14, B60K 17/00, B60L 1/00, B60L 1/02, B60L 3/00, B60L 3/04, E02F 9/02, E02F 3/08, B60L 50/50, B62D 63/02, B66C 13/12, B66C 13/18, B66C 21/00, B66C 25/00, E02F 3/00, E02F 9/08, E02F 9/20, B62D 55/06, E02F 3/58

(54) **ARBEITSMASCHINE MIT ELEKTRISCHEM FAHRANTRIEB**
ELECTRIC TRACTION DRIVE WORKING MACHINE
MACHINE DE TRAVAIL DOTÉE D'UN ENTRAÎNEMENT ÉLECTRIQUE

(30) Priorität: 21.09.2022 DE 202022105317 U
(43) Veröffentlichungstag der Anmeldung: 27.03.2024
(73) Patentinhaber: Liebherr-Werk Nenzing GmbH, 6710 Nenzing (AT)
(72) Erfinder: Schall, Paul, 6800 Feldkirch (AT); Schwarzhans, Markus, 6780 Schruns (AT); Wachter, Dominik, 6751 Innerbraz (AT)
(74) Vertreter: Laufhütte, Dieter

(56) Entgegenhaltungen:
- JP-A- 2010 121 327
- JP-A- 2019 044 370
- JP-A- 2019 190 104
- JP-A- 2021 156 049
- JP-B2- 3 583 533
- JP-B2- 5 420 458
- US-A1- 2020 102 720
- US-A1- 2022 074 163

## Beschreibung

Die vorliegende Erfindung betrifft eine Arbeitsmaschine, insbesondere einen Seilbagger, gemäß dem Oberbegriff des Anspruchs 1.

Bei elektrisch angetriebenen Arbeitsmaschinen mit Raupenfahrwerk sind an den Raupenträgern typischerweise elektrische Fahrantriebe bzw. Fahrmotoren in Form von Elektromotoren angeordnet, welche die Raupenketten antreiben. Häufig besitzen derartige Arbeitsmaschinen einen Unterwagen mit einem Mittelteil, an dem die Raupenträger montiert sind, wobei ein Oberwagen drehbar auf dem Mittelteil gelagert sein kann.

Die elektrischen Fahrantriebe werden üblicherweise vom Unterwagen aus mit Strom und ggf. Kühlmittel versorgt. Die Fahrantriebe sind typischerweise an das Hochvolt-(HV)-Bordnetz der Arbeitsmaschine angeschlossen, wobei häufig eine am bzw. im Unterwagen angeordnete Leistungselektronik die Kommunikation mit den Fahrantriebe und die Modulation von Strom und Spannung zur Versorgung der Fahrantriebe übernimmt. Die Stromversorgung der Fahrantriebe erfolgt über Energieversorgungsleitungen (typischerweise drei AC-Phasen-Stromkabel, die an einem Inverter der Leistungselektronik angeschlossen sind). Daneben gibt es häufig eine Reihe weiterer Versorgungsleitungen wie Kühlmittelleitungen, Steuerleitungen zur Steuerung der Fahrantriebe und/oder Signalleitungen zur Übertragung von beispielsweise Sensorsignalen.

Diese Motorleitungen müssen vom Unterwagenmittelteil so zu den einzelnen Fahrantrieben an den Raupenträgern verlegt sein, dass sie aufgrund der rauen Baustellenumgebung vor mechanischer Beschädigung geschützt sind. Aus dem Stand der Technik ist es daher bekannt, die Motorleitungen vom Mittelteil zu den Fahrantrieben durch den Stahlbau des Unterwagens in die Raupenträger zu führen, wo sie an den Fahrantrieben angeschlossen sind. Dadurch wird zwar ein effektiver Schutz der Motorleitungen vor mechanischen Beschädigungen erreicht. Allerdings ist die Leitungsführung durch die Geometrie von Unterwagenmittelteil und Raupenträgern vorgegeben und daher typischerweise nicht hinsichtlich der Übertragungslänge optimiert. Zudem gestaltet sich die Montage und Demontage der Raupenträger aufgrund der im Stahlbau verlaufenden Motorleitungen mitunter aufwändig.

US 2022/074163 A1 offenbart Arbeitsmaschine, mit einem Unterwagen, welcher ein Mittelteil und mindestens einen mit dem Mittelteil verbundenen Raupenträger umfasst, der mindestens einen elektrischen Fahrantrieb in Form eines Elektromotors aufweist, wobei zwischen Fahrantrieb und Mittelteil mindestens eine Energieübertragungsleitung zur Stromversorgung des Fahrantriebs sowie mindestens eine weitere Versorgungsleitung verläuft, gemäß dem Stand der Technik.

Vor diesem Hintergrund liegt der vorliegenden Erfindung die Aufgabe zugrunde, die Leitungsführung der Motorleitungen bei gattungsgemäßen elektrifizierten Arbeitsmaschinen zu optimieren und dabei insbesondere eine Vereinfachung der Montage und Demontage der Raupenträger zu erreichen.

Erfindungsgemäß wird diese Aufgabe durch eine Arbeitsmaschine mit den Merkmalen des Anspruchs 1 gelöst. Vorteilhafte Ausführungsformen der Erfindung ergeben sich aus den Unteransprüchen und der nachfolgenden Beschreibung.

Demnach wird eine Arbeitsmaschine vorgeschlagen, welche einen Unterwagen mit einem Mittelteil und mindestens einen mit dem Mittelteil verbundenen Raupenträger umfasst. Bei der Arbeitsmaschine kann es sich beispielsweise um einen Seilbagger handeln. Der mindestens eine Raupenträger besitzt mindestens einen elektrischen Fahrantrieb, in Form eines Elektromotors, welcher insbesondere eine Raupenkette des Raupenträgers antreibt Zwischen dem Fahrantrieb und dem Mittelteil verläuft mindestens eine Energieübertragungsleitung zur Stromversorgung des Fahrantriebs sowie mindestens eine weitere Versorgungsleitung. Die Gesamtheit dieser zwischen Mittelteil und Fahrantrieb verlaufenden Leitungen wird im Folgenden als Motorleitungen bezeichnet und dient der Versorgung des Fahrantriebs.

Erfindungsgemäß verlaufen die mindestens eine Energieversorgungsleitung und die mindestens eine weitere Versorgungsleitung gemeinsam in einer separaten Schutzeinrichtung, welche sich außerhalb von Mittelteil und Raupenträger erstreckt. Mit anderen Worten sind die Motorleitungen nicht wie bei bekannten Maschinen innerhalb des Stahlbaus des Unterwagens verlegt, sondern verlaufen zumindest teilweise, insbesondere großteils, außerhalb von Mittelteil und Raupenträger innerhalb der separaten Schutzeinrichtung. Die Schutzeinrichtung ist insbesondere nicht Teil der Unterwagenstahlkonstruktion, sondern eine separate Schutzhülle zur direkten Führung der Motorleitungen vom Mittelteil zum Fahrantrieb. Die Schutzeinrichtung sorgt für einen mechanischen Schutz vor Beschädigungen der darin verlaufenden Motorleitungen im Außenbereich der Arbeitsmaschine.

Durch die direkte und außenliegende Verlegung der Motorleitungen des elektrischen Fahrantriebs ist eine einfache Zugänglichkeit gegeben. Dadurch lassen sich die Motorleitungen einfacher von entsprechenden Anschlüssen am Raupenträger bzw. Fahrantrieb und/oder am Mittelteil lösen und mit diesen verbinden, beispielsweise zur transportbedingten Montage / Demontage des Raupenträgers oder zur Anpassung an eine aktuelle Maschinenkonfiguration.

Zudem verringert sich die Länge der Motorleitungen, d.h. der mindestens einen Energieversorgungsleitung und der mindestens einen weiteren Versorgungsleitung, da diese nicht innerhalb der Stahlkonstruktionen von Mittelteil und Raupenträger verlaufen, sondern mehr oder weniger direkt vom Mittelteil zum Fahrantrieb. Gerade bei Signalleitungen wie beispielsweise Resolverkabeln ergibt sich dadurch eine Verbesserung der Signalübertragungsqualität.

In einer möglichen Ausführungsform ist vorgesehen, dass die Schutzeinrichtung zumindest abschnittsweise flexibel ausgebildet, d.h. beweglich bzw. verformbar ist. Vorzugsweise ist die gesamte Schutzeinrichtung flexibel ausgestaltet. Durch die mechanische Flexibilität der Schutzeinrichtung kann die Leitungsführung an eine aktuelle Maschinenkonfiguration angepasst werden, beispielsweise an das Vorhandensein eines Zentralballasts oder entsprechend eines momentanen Montagezustandes der Arbeitsmaschine. Die Motorleitungen müssen hierzu nicht neu verlegt werden, sondern können durch die flexible Schutzeinrichtung zum gewünschten Anschlussort am Fahrantrieb geführt bzw. umgelenkt werden.

Optional können am Raupenträger und/oder am Mittelteil ein oder mehrere Führungselemente, beispielsweise in Form von Stangen, Haken, Durchführungen, Schlauchbefestigern oder dergleichen, vorgesehen sein, welche die flexible Schutzeinrichtung führen bzw. in einer bestimmten Position oder zumindest in einem bestimmten räumlichen Bereich halten.

In einer weiteren möglichen Ausführungsform ist vorgesehen, dass die Schutzeinrichtung eine Energieführungskette umfasst, innerhalb der die Motorleitungen verlaufen. Die Energieführungskette bietet eine flexible und geschützte Führung der Motorleitungen. Alternativ oder zusätzlich kann die Schutzeinrichtung einen Schlauchmantel umfassen, innerhalb der die Motorleitungen verlaufen. Der Schlauchmantel kann aus Kunststoff oder einem Verbundwerkstoff gefertigt sein. Ferner ist denkbar, dass der Schlauchmantel aus einem Netz bzw. Gewebe besteht, welches aus Kunststoff, Metall, einem Verbundwerkstoff oder eine Kombination hiervon gefertigt sein kann. Auch ein solcher Schlauch bietet eine flexible und geschützte Führung der Motorleitungen. Denkbar ist, dass die Schutzeinrichtung durch eine Energieführungskette, einen Schlauchmantel oder eine Kombination (d.h. unterschiedliche Abschnitte, die verschieden ausgebildet sind) gebildet wird.

In einer weiteren möglichen Ausführungsform ist vorgesehen, dass die Schutzeinrichtung die mindestens eine Energieübertragungsleitung und die mindestens eine weitere Versorgungsleitung vollständig umgibt. Dadurch sind die umschlossenen Motorleitungen ideal vor mechanischen Beschädigungen oder Verschmutzung im Außenbereich der Arbeitsmaschine geschützt. Dies schließt nicht aus, dass (wie beispielsweise im Falle einer Energieführungskette) Öffnungen, Spalte oder sonstige Ausnehmungen in der Schutzeinrichtung ausgebildet sind, z.B. um eine mechanische Flexibilität zu gewährleisten.

**In** einer weiteren möglichen Ausführungsform ist vorgesehen, dass die innerhalb der Schutzeinrichtung verlaufenden Leitungen Anschlüsse aufweisen, über die sie von mittelteilseitigen und/oder fahrantriebseitigen Anschlüssen lösbar bzw. mit diesen verbindbar sind. Beispielsweise können die jeweiligen Leitungen (d.h. die mindestens eine Energieversorgungsleitung und die mindestens eine weitere Versorgungsleitung) jeweils einen eigenen Anschluss aufweisen, sodass die Motorleitungen jeweils einzeln verbindbar bzw. lösbar sind. Alternativ ist denkbar, dass die Schutzeinrichtung einen gemeinsamen Anschluss aufweist, an die die jeweiligen Motorleitungen angebunden sind, sodass sich die gesamte Schutzeinrichtung bzw. alle darin verlaufenden Motorleitungen schnell und unkompliziert gemeinsam trennen und verbinden lassen, beispielsweise in Form eines Schnellkupplers für unterschiedliche Medien wie Strom, Kühlmittel etc.

Die Anschlüsse können am raupenträger- bzw. fahrantriebseitigen Ende oder am mittelteilseitigen Ende oder an beiden Enden der Motorleitungen bzw. der Schutzeinrichtung vorhanden sein. Bei den Anschlüssen kann es sich um für die jeweiligen übertragenen Medien (Strom, Flüssigkeit, Gas etc.) übliche Konnektoren, Buchsen, Stecker oder dergleichen handeln.

In einer weiteren möglichen Ausführungsform ist vorgesehen, dass die Anschlüsse zum Herstellen und Trennen der Verbindungen von außerhalb des Mittelteils und/oder Raupenträgers zugänglich sind. Insbesondere sind die Anschlüsse im verbundenen Zustand außerhalb von Mittelteil und/oder Raupenträger angeordnet. Dadurch können die Motorleitungen einfach und schnell von den jeweiligen Anschlussstellen am Raupenträger und/oder Mittelteil gelöst werden, beispielsweise bei einer Demontage des Raupenträgers. Eine Verbindung gelingt ebenso reibungslos und schnell.

Im Gegensatz dazu müsste bei einer über den Stahlbau des Mittelteils in den Raupenträger verlaufenden Leitungsführung beispielsweise durch eine Öffnung im Stahlbau sichergestellt werden, dass die entsprechenden Anschlussstellen zugänglich sind, was die Montage / Demontage erheblich schwieriger und zeitaufwendiger gestaltet.

In einer weiteren möglichen Ausführungsform ist mindestens eine weitere Versorgungsleitung vorgesehen, die eine Kühlmittelleitung zur Bereitstellung von Kühlmittel für den Fahrantrieb darstellt. Das Kühlmittel kann flüssig oder gasförmig sein und dient der Kühlung des Fahrantriebs bzw. Elektromotors. Denkbar ist, dass zwei oder mehr Kühlmittelleitungen vorgesehen sind, die allesamt zusammen mit der mindestens einen Energieversorgungsleitung innerhalb der Schutzeinrichtung verlaufen.

In einer weiteren möglichen Ausführungsform ist mindestens eine weitere Versorgungsleitung vorgesehen, die eine Signalleitung zur Übermittlung von Steuersignalen an den Fahrantrieb und/oder zur Übermittlung von Sensorsignalen an eine Steuerung darstellt. Bei besagter Steuerung kann es sich um einen Inverter oder eine separate Steuereinheit handeln. Eine solche Steuerleitung dient insbesondere der Steuerung des Fahrantriebs. Die Steuerung kann über einen Inverter erfolgen, der insbesondere im Mittelteil angeordnet ist. Es können mehrere Steuer- und/oder Signalleitungen vorgesehen, um unterschiedliche Signale zu übertragen. Bei einer oder mehreren Signalleitungen kann es sich um ein Resolverkabel handeln.

In einer weiteren möglichen Ausführungsform sind mindestens zwei, vorzugsweise drei Energieversorgungsleitungen zur Energieversorgung des Fahrantriebs vorgesehen, die allesamt zusammen mit der mindestens einen weiteren Versorgungsleitung innerhalb der Schutzeinrichtung verlaufen. Es können insbesondere drei Phasen-AC-Kabel vorgesehen sein, die beispielsweise zwischen einem Inverter und dem Fahrantrieb verlaufen und die für den Elektromotorbetrieb benötigte Stromversorgung bereitstellen.

In einer weiteren möglichen Ausführungsform ist vorgesehen, dass die mindestens eine Energieversorgungsleitung den Fahrantrieb mit einem Inverter verbindet, welcher vorzugsweise im Mittelteil des Unterwagens angeordnet ist. Der Inverter kann Teil eines Hochvolt-Bordnetzes der Arbeitsmaschine sein, die mehrere im Unterwagen, vorzugsweise im Mittelteil, angeordnete Elektronikkomponenten umfasst. Der Inverter kann die Kommunikation mit dem Fahrantrieb (d.h. die Steuerung) und/oder die Modulation von Strom und Spannung zur Energieversorgung des Fahrantriebs übernehmen.

In einem weiteren möglichen Beispiel ist vorgesehen, dass die Leitungsführung der Schutzeinrichtung an eine Maschinenkonfiguration der Arbeitsmaschine anpassbar ist. Vorzugsweise ist ein Zentralballast (oder mehrere Zentralballastelemente) an dem Unterwagen anbaubar, wobei für jede Konfiguration (Zentralballast angebaut oder abgebaut) eine andere Führung der Motorleitungen benötigt oder zweckmäßig ist. Durch die separate bzw. direkte Verlegung der Motorleitungen innerhalb der gemeinsamen Schutzeinrichtung und insbesondere durch eine bevorzugte flexible Ausgestaltung der Schutzeinrichtung kann die Leitungsführung flexibel an die aktuelle Maschinenkonfiguration angepasst werden, was aufwändige Umbaumaßnahmen der Verkabelung vermeidet.

In einer weiteren möglichen Ausführungsform sind mindestens zwei mit dem Mittelteil verbundene Raupenträger vorgesehen, welche insbesondere auf gegenüberliegenden Seiten des Mittelteils angeordnet sind. Die Raupenträger weisen jeweils mindestens einen Fahrantrieb auf, dessen Motorleitungen in einer eigenen, dem jeweiligen Fahrantrieb zugeordneten Schutzeinrichtung zum Mittelteil verlaufen. Die Schutzeinrichtungen können im Wesentlichen symmetrisch zu einer mittleren Längsachse des Unterwagens verlaufen.

Weitere Merkmale, Einzelheiten und Vorteile der Erfindung ergeben sich aus dem nachfolgend anhand der Figuren erläuterten Ausführungsbeispiel. Es zeigen:
- Figur 1:: eine seitliche Ansicht des Unterwagens und Oberwagens der erfindungsgemäßen Arbeitsmaschine gemäß einem bevorzugten Ausführungsbeispiel;
- Figur 2:: eine perspektivische Ansicht des Unterwagens der Arbeitsmaschine gemäß Figur 1; und
- Figur 3:: eine schematische Darstellung der Schutzeinrichtung mit darin verlaufenden Motorleitungen.

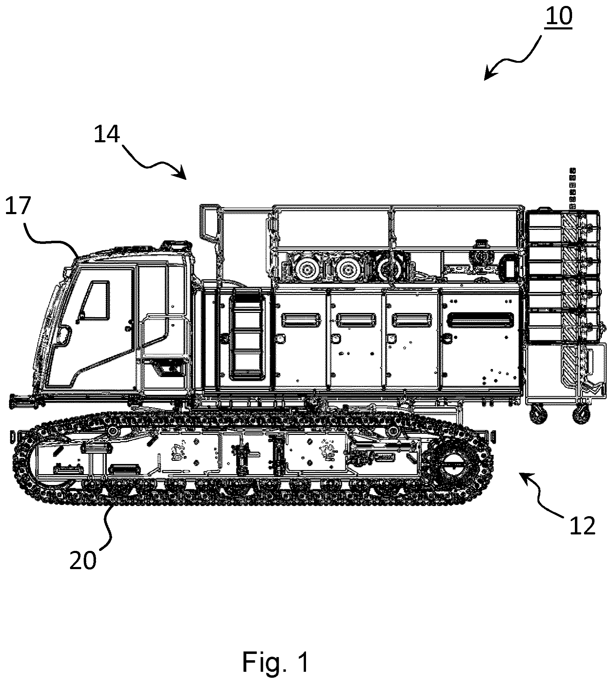

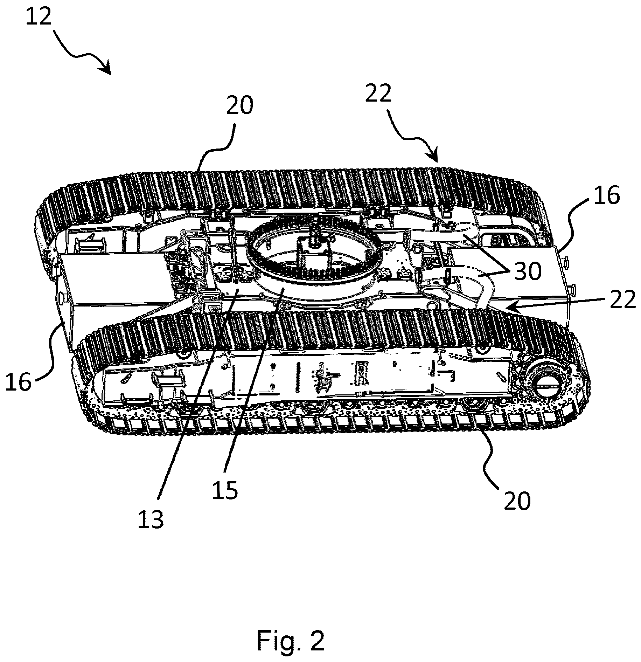

In der Figur 1 ist ein bevorzugtes Ausführungsbeispiel der erfindungsgemäßen Arbeitsmaschine 10 in einer seitlichen Ansicht dargestellt. Bei dem gezeigten Ausführungsbeispiel handelt es sich um einen Seilbagger 10 mit einem fahrbaren Unterwagen 12 und einem um eine vertikale Drehachse drehbar auf dem Unterwagen 12 gelagerten Oberwagen 14. Der Unterwagen 12 ist in der Figur 2 in einer perspektivischen Ansicht gezeigt. Der Ausleger des Seilbaggers 10 ist hier nicht dargestellt. Der Oberwagen 14 weist eine Fahrerkabine 17 auf und ist über einen Drehkranz 15, welcher in der Figur 2 dargestellt ist, drehbar mit einem Mittelteil 13 des Unterwagens 12 verbunden.

Seitlich am Mittelteil 13 sind zwei Raupenfahrwerke 20 befestigt, sodass das Mittelteil 13 mittig zwischen den Raupenträgern 20 des Raupenfahrwerks sitzt. Die Raupenträger 20 besitzen elektrische Fahrantriebe 22, welche die Raupenketten antreiben und deren Position in der Figur 2 durch Pfeile angedeutet ist. Bei den Fahrantrieben 22 handelt es sich insbesondere um Elektromotoren.

Die elektrischen Fahrantriebe 22 werden vom Mittelteil 13 aus versorgt und gesteuert. Hierzu sind in dem hier gezeigten Ausführungsbeispiel pro Fahrantrieb 22 drei Energieversorgungsleitungen 40 in Form von AC-Phasen-Kabeln vorgesehen, die den jeweiligen Fahrantrieb 22 mit Strom aus dem HV-Bordnetz versorgen. Die Energieversorgungsleitungen 40 verlaufen zwischen den Fahrantrieben 22 und einem Inverter (nicht dargestellt), der im Mittelteil 13 angeordnet ist.

Darüber hinaus erfolgt die Steuerung der Fahrantriebe 22 über eine oder mehrere Steuerleitungen 42. Die Kommunikation mit den Fahrantrieben 22 kann ebenfalls der Inverter oder ein separates Steuerungselement übernehmen. Zusätzlich können eine oder mehrere Signalleitungen 42 vorgesehen sein, beispielsweise um Sensorsignale von den Fahrantrieben 22 an eine Steuerung (oder den Inverter) im Mittelteil 13 zu übermitteln. Schließlich werden die Fahrantriebe 22 vorzugsweise gekühlt. Hierzu kann jeder Fahrantrieb 22 an einen Kühlkreis angeschlossen sein, wobei zwischen dem Mittelteil 13 und den Fahrantrieben 22 jeweils zwei Kühlmittelleitungen 44 verlaufen, die das Kühlmittel an die Fahrantriebe 22 liefern und das erwärmte Kühlmittel wieder zurück zum Mittelteil 13 befördern. Diese zusätzlich zu den Energieversorgungsleitungen 40 vorgesehenen Leitungen 42, 44 werden vorliegend als zusätzliche Versorgungsleitungen 42, 44 bezeichnet. Alle Leitungen 40, 42, 44 zusammen, die zwischen den Fahrantrieben 22 und dem Mittelteil 13 verlaufen, werden vorliegend verkürzt als Motorleitungen 40, 42, 44 bezeichnet.

Der Inverter übernimmt in diesem Ausführungsbeispiel vorzugsweise sowohl die Kommunikation mit den Fahrantrieben 22 als auch die Modulation von Strom und Spannung zur Versorgung der Fahrantriebe 22.

Die genaue Ausgestaltung des Energieversorgungssystems bzw. der Leistungselektronik der Arbeitsmaschine 10 zur Versorgung der Fahrantriebe 22 ist nicht erfindungsrelevant und hängt von der Ausgestaltung der Fahrantriebe 22 ab.

Die Motorleitungen 40, 42, 44 müssen vom Mittelteil 13 zu den Fahrantrieben 22 an den Raupenträgern 20 geführt werden. Im Stand der Technik ist dies beispielsweise dadurch gelöst, dass die Leitungen innerhalb der Stahlkonstruktion des Unterwagens 12 in die Raupenträger 20 und weiter zu den Fahrantrieben 22 geführt werden. Dies bietet zwar einen guten mechanischen Schutz der Motorleitungen 40, 42, 44 vor Beschädigungen und Verschmutzung, führt aber auch zu größeren Kabellängen und erschwert die Montage / Demontage der Raupenträger 20 aufgrund der begrenzten Zugänglichkeit der Motorleitungen 40, 42, 44.

Aus diesem Grund wird bei der erfindungsgemäßen Arbeitsmaschine 10 ein anderer Weg beschritten. Hier werden die Motorleitungen 40, 42, 44 außerhalb des Stahlbaus des Unterwagens 12 direkt vom Mittelteil 13 aus zu den Fahrantrieben 22 geführt. Um den nötigen mechanischen Schutz zu gewährleisten, verlaufen die Motorleitungen 40, 42, 44 in speziellen Schutzeinrichtungen 30, die sich zwischen dem Mittelteil 13 und den Raupenträgern 20 im Bereich der Fahrantriebe 22 erstrecken. Die Schutzeinrichtungen 30 sind nicht Teil des Stahlbaus des Unterwagens 12.

Darüber hinaus sind die Schutzeinrichtungen 30 insbesondere flexibel ausgestaltet, d.h. sie sind beweglich. Damit kann die Leitungsführung variiert werden. Hierzu können die Schutzeinrichtungen 30 zumindest abschnittsweise beispielsweise als aus mehreren gelenkig miteinander verbundenen Gliedern bestehende Energieführungsketten oder Schläuche (oder als Kombination hiervon) ausgeführt sein. Bevorzugt ist, dass die gesamte Länge der Schutzeinrichtung 30 zwischen Mittelteil 13 und Raupenträger 20 flexibel ausgebildet ist.

In dem hier gezeigten Ausführungsbeispiel sind die Schutzeinrichtungen 30 als Schlauchmantel ausgebildet, innerhalb welchem die Motorleitungen 40, 42, 44 verlaufen, vgl. Figur 2. Im Vergleich zur konventionellen Lösung, die Motorleitungen 40, 42, 44 vom Mittelteil 13 aus mittig in die Raupenträger 20 und dann entlang der Längsachse der Raupenträger 20 zu den Fahrantrieben 22 zu führen, ergeben sich wesentlich geringere Kabellängen.

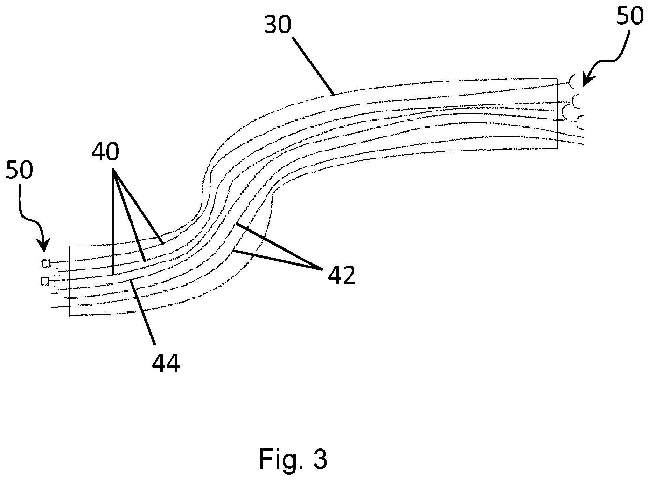

Die Figur 3 zeigt schematisch ein Ausführungsbeispiel der flexiblen Schutzeinrichtung 30 mit den darin verlaufenden Motorleitungen 40, 42, 44, hier drei Energieversorgungsleitungen 40, eine Steuer- / Signalleitung 44 und zwei Kühlmittelleitungen 42.

Bevorzugt weisen die Energieversorgungsleitungen 40 und die Steuer- / Signalleitung 44 jeweils elektrische Konnektoren bzw. Anschlüsse 50 auf, und zwar bevorzugt an beiden Enden, um sie einfach und schnell von den Anschlüssen am Fahrantrieb 22 und am Inverter trennen zu können. Alternativ könnten auch gemeinsame Anschlüsse an den Enden der Schutzeinrichtung 30 vorgesehen sein (beispielsweise nach dem Prinzip einer Multikupplung), welche die jeweiligen Anschlüsse für die Motorleitungen 40, 42, 44 beinhalten.

Wie in der Figur 2 zu erkennen ist, weist der hier gezeigte Seilbagger 10 vorne und hinten zwischen den Raupenträgern 20 jeweils einen am Mittelteil 13 montierten Zentralballast 16 auf. Dieser kann vorzugsweise wahlweise an- oder abgebaut sein, je nach Einsatzfall. Durch die flexible Schutzeinrichtung 30 lässt sich die Leitungsführung der Motorleitungen 40, 42, 44 somit an den Montagezustand des Zentralballasts 16 anpassen. Auch lassen sich durch die außenliegende Verlegung der Motorleitungen 40, 42, 44 deren Anschlüsse 50 leicht erreichen, was die Montage / Demontage der Raupenträger 20 erheblich erleichtert.

Zusammengefasst ergeben sich durch die flexiblen Schutzeinrichtungen 30 folgende Vorteile:
- Durch die direkte und außenliegende Verlegung der Motorleitungen 40, 42, 44 der Fahrantriebe 22 ist eine einfache Zugänglichkeit gegeben.
- Durch die einfache Zugänglichkeit ist das Montieren / Demontieren der Motorleitungen 40, 42, 44 am Fahrantrieb 22 oder am Inverter einfach möglich. Dadurch können bei der transportbedingten Demontage / Montage die Fahrantriebe 22 von den Motorleitungen 40, 42, 44 schnell und einfach entkoppelt werden.
- Durch die Flexibilität der Schutzeinrichtung 30 kann die Leitungsführung an die aktuelle Maschinenkonfiguration angepasst werden, beispielsweise das Vorhandensein eines Zentralballasts 16 oder entsprechend des Montagezustands.
- Die Motorleitungen 40, 42, 44 können im Außenbereich der Arbeitsmaschine 10 geschützt verlegt werden. Die flexible Schutzeinrichtung 30 sorgt für einen mechanischen Schutz der Motorleitungen 40, 42, 44.
- Im Vergleich zum Stand der Technik ergeben sich für alle Motorleitungen 40, 42, 44 kürzere Leitungslängen zwischen Fahrantrieb 22 und Inverter, was sich insbesondere bei Resolverkabeln positiv auf die Signalübertragungsqualität auswirkt.

### Bezugszeichenliste:

- 10: Arbeitsmaschine
- 12: Unterwagen
- 13: Mittelteil
- 14: Oberwagen
- 15: Drehkranz
- 16: Zentralballast
- 17: Fahrerkabine
- 20: Raupenträger
- 22: Fahrantrieb
- 30: Schutzeinrichtung
- 40: Energieversorgungsleitung
- 42: Signal- / Steuerleitung
- 44: Kühlmittelleitung
- 50: Anschlüsse

## Patentansprüche

1. Arbeitsmaschine (10), insbesondere Seilbagger, mit
einem Unterwagen (12), welcher ein Mittelteil (13) und mindestens einen mit dem Mittelteil (13) verbundenen Raupenträger (20) umfasst, der mindestens einen elektrischen Fahrantrieb (22) in Form eines Elektromotors aufweist, wobei
zwischen Fahrantrieb (22) und Mittelteil (13) mindestens eine Energieübertragungsleitung (40) zur Stromversorgung des Fahrantriebs (22) sowie mindestens eine weitere Versorgungsleitung (42, 44) verläuft,
**dadurch gekennzeichnet,**
**dass** die mindestens eine Energieversorgungsleitung (40) und die mindestens eine weitere Versorgungsleitung (42, 44) gemeinsam in einer separaten Schutzeinrichtung (30) außerhalb von Mittelteil (13) und Raupenträger (20) verlaufen.

2. Arbeitsmaschine (10) nach Anspruch 1, wobei die Schutzeinrichtung (30) zumindest abschnittsweise flexibel ausgebildet ist, wobei am Mittelteil (13) und/oder am Raupenträger (20) vorzugsweise mindestens ein Führungselement zur Führung der flexiblen Schutzeinrichtung (30) angeordnet ist.

3. Arbeitsmaschine (10) nach Anspruch 1 oder 2, wobei die Schutzeinrichtung (30) eine Energieführungskette und/oder einen Schlauchmantel umfasst.

4. Arbeitsmaschine (10) nach einem der vorhergehenden Ansprüche, wobei die Schutzeinrichtung (30) die mindestens eine Energieübertragungsleitung (40) und die mindestens eine weitere Versorgungsleitung (42, 44) vollständig umgibt.

5. Arbeitsmaschine (10) nach einem der vorhergehenden Ansprüche, wobei die innerhalb der Schutzeinrichtung (30) verlaufenden Leitungen (40, 42, 44) Anschlüsse aufweisen, über die sie von mittelteilseitigen und/oder fahrantriebseitigen Anschlüssen lösbar sind.

6. Arbeitsmaschine (10) nach Anspruch 5, wobei die Anschlüsse zum Herstellen und Trennen der Verbindungen von außerhalb des Mittelteils (13) und/oder Raupenträgers (20) zugänglich und insbesondere im verbundenen Zustand außerhalb von Mittelteil (13) und/oder Raupenträger (20) angeordnet sind.

7. Arbeitsmaschine (10) nach einem der vorhergehenden Ansprüche, wobei mindestens eine weitere Versorgungsleitung eine Kühlmittelleitung (44) zur Bereitstellung von Kühlmittel für den Fahrantrieb (22) ist.

8. Arbeitsmaschine (10) nach einem der vorhergehenden Ansprüche, wobei mindestens eine weitere Versorgungsleitung eine Signalleitung (42) zur Übermittlung von Steuersignalen an den Fahrantrieb (22) und/oder von Sensorsignalen an eine Steuerung ist.

9. Arbeitsmaschine (10) nach einem der vorhergehenden Ansprüche, wobei mindestens zwei, vorzugsweise drei Energieversorgungsleitungen (40) zur Energieversorgung des Fahrantriebs (22) vorgesehen sind.

10. Arbeitsmaschine (10) nach einem der vorhergehenden Ansprüche, wobei die mindestens eine Energieversorgungsleitung (40) den Fahrantrieb (22) mit einem Inverter verbindet, welcher vorzugsweise im Mittelteil (13) des Unterwagens (12) angeordnet ist.

11. Arbeitsmaschine (10) nach einem der vorhergehenden Ansprüche, umfassend mindestens zwei mit dem Mittelteil (13) verbundene Raupenträger (20), welche jeweils mindestens einen Fahrantrieb (22) aufweisen, dessen mindestens eine Energieübertragungsleitung (40) und mindestens eine weitere Versorgungsleitung (42, 44) in einer eigenen Schutzeinrichtung (30) zum Mittelteil (13) verlaufen.

## Claims

1. Work machine (10), in particular cable excavator, having
an undercarriage (12) which comprises a middle part (13) and at least one crawler carrier (20) connected to the middle part (13), which comprises at least one electric traction drive (22) in the form of an electric motor, wherein
at least one energy transmission line (40) for supplying power to the traction drive (22) and at least one further supply line (42, 44) extends between traction drive (22) and middle part (13),
**characterized in that**
the at least one energy supply line (40) and the at least one further supply line (42, 44) extend together in a separate protection means (30) outside the middle part (13) and the crawler carrier (20).

2. Work machine (10) according to claim 1, wherein the protection means (30) is configured to be flexible at least in sections, wherein at least one guide element for guiding the flexible protection means (30) is preferably arranged on the middle part (13) and/or on the crawler carrier (20).

3. Work machine (10) according to claim 1 or 2, wherein the protection means (30) comprises an energy chain and/or a hose jacket.

4. Work machine (10) according to any one of the preceding claims, wherein the protection means (30) completely surrounds the at least one energy transmission line (40) and the at least one further supply line (42, 44).

5. Work machine (10) according to any one of the preceding claims, wherein the lines (40, 42, 44) extending inside the protection means (30) have connections via which they can be detached from connections on the middle part side and/or on the traction drive side.

6. Work machine (10) according to claim 5, wherein the connections for making and disconnecting the connections are accessible from outside the middle part (13) and/or crawler carrier (20) and, in particular, are arranged outside the middle part (13) and/or crawler carrier (20) in the connected state.

7. Work machine (10) according to any one of the preceding claims, wherein at least one further supply line is a coolant line (44) for providing coolant for the traction drive (22).

8. Work machine (10) according to any one of the preceding claims, wherein at least one further supply line is a signal line (42) for transmitting control signals to the traction drive (22) and/or sensor signals to a controller.

9. Work machine (10) according to any one of the preceding claims, wherein at least two, preferably three, energy supply lines (40) are provided for supplying power to the traction drive (22).

10. Work machine (10) according to any one of the preceding claims, wherein the at least one energy supply line (40) connects the traction drive (22) to an inverter, which is preferably arranged in the middle part (13) of the undercarriage (12).

11. Work machine (10) according to any one of the preceding claims, comprising at least two crawler carriers (20) which are connected to the middle part (13) and which each have at least one traction drive (22) whose at least one energy transmission line (40) and at least one further supply line (42, 44) extend to the middle part (13) in a separate protection means (30).

## Revendications

1. Machine de travail (10), notamment excavatrice à câble, avec
un châssis (12), qui comprend une partie centrale (13) et au moins un support de chenille (20) relié à la partie centrale (13), qui présente au moins un entraînement de déplacement électrique (22) sous la forme d'un moteur électrique,
au moins une conduite de transmission d'énergie (40) pour l'alimentation électrique de l'entraînement de déplacement (22) ainsi qu'au moins une autre conduite d'alimentation (42, 44) s'étendant entre l'entraînement de déplacement (22) et la partie centrale (13),
**caractérisée en ce que**
l'au moins une conduite d'alimentation en énergie (40) et l'au moins une autre conduite d'alimentation (42, 44) s'étendent ensemble dans un dispositif de protection séparé (30) à l'extérieur de la partie centrale (13) et du support de chenille (20).

2. Machine de travail (10) selon la revendication 1, dans laquelle le dispositif de protection (30) est réalisé sous forme flexible au moins par sections, au moins un élément de guidage étant agencé de préférence sur la partie centrale (13) et/ou sur le support de chenille (20) pour guider le dispositif de protection flexible (30).

3. Machine de travail (10) selon la revendication 1 ou 2, dans laquelle le dispositif de protection (30) comprend une chaîne porte-câbles et/ou une gaine flexible.

4. Machine de travail (10) selon l'une quelconque des revendications précédentes, dans laquelle le dispositif de protection (30) entoure complètement l'au moins une conduite de transmission d'énergie (40) et l'au moins une autre conduite d'alimentation (42, 44).

5. Machine de travail (10) selon l'une quelconque des revendications précédentes, dans laquelle les conduites (40, 42, 44) s'étendant à l'intérieur du dispositif de protection (30) présentent des raccords par lesquels elles peuvent être détachées de raccords situés du côté de la partie centrale et/ou du côté de l'entraînement de déplacement.

6. Machine de travail (10) selon la revendication 5, dans laquelle les raccords pour établir et couper les liaisons sont accessibles de l'extérieur de la partie centrale (13) et/ou du support de chenille (20) et sont notamment agencés à l'extérieur de la partie centrale (13) et/ou du support de chenilles (20) à l'état relié.

7. Machine de travail (10) selon l'une quelconque des revendications précédentes, dans laquelle au moins une autre conduite d'alimentation est une conduite de liquide de refroidissement (44) pour la fourniture de liquide de refroidissement pour l'entraînement de déplacement (22).

8. Machine de travail (10) selon l'une quelconque des revendications précédentes, dans laquelle au moins une autre conduite d'alimentation est une conduite de signalisation (42) pour la transmission de signaux de commande à l'entraînement de déplacement (22) et/ou de signaux de capteur à une commande.

9. Machine de travail (10) selon l'une quelconque des revendications précédentes, dans laquelle au moins deux, de préférence trois conduites d'alimentation en énergie (40) sont prévues pour l'alimentation en énergie de l'entraînement de déplacement (22).

10. Machine de travail (10) selon l'une quelconque des revendications précédentes, dans laquelle l'au moins une conduite d'alimentation en énergie (40) relie l'entraînement de déplacement (22) à un onduleur qui est de préférence agencé dans la partie centrale (13) du châssis (12).

11. Machine de travail (10) selon l'une quelconque des revendications précédentes, comprenant au moins deux supports de chenille (20) reliés à la partie centrale (13), qui présentent chacun au moins un entraînement de déplacement (22), dont au moins une conduite de transmission d'énergie (40) et au moins une autre conduite d'alimentation (42, 44) s'étendent dans un dispositif de protection propre (30) vers la partie centrale (13).
